(19) Europäisches Patentamt

European Patent Office

Office européen des brevets

(11) **EP 0 683 407 B1**

(12) **EUROPÄISCHE PATENTSCHRIFT**

(45) Veröffentlichungstag und Bekanntmachung des Hinweises auf die Patenterteilung:
**10.11.1999 Patentblatt 1999/45**

(51) Int Cl.⁶: **G02B 6/12**

(21) Anmeldenummer: **95102653.3**

(22) Anmeldetag: **24.02.1995**

(54) **Integriert optische Verzweiger-Anordnung**

Integrated optical branch

Branch optique intégrée

(84) Benannte Vertragsstaaten:
**CH DE DK ES FR GB IT LI NL SE**

(30) Priorität: **20.05.1994 DE 4417698**

(43) Veröffentlichungstag der Anmeldung:
**22.11.1995 Patentblatt 1995/47**

(73) Patentinhaber: **IOT Integrierte Optik GmbH & Co. KG**
**68753 Waghäusel-Kirrlach (DE)**

(72) Erfinder:
• **Wolf, Barbara**
**D-76709 Kronau (DE)**
• **Fabricius, Norbert, Dr.**
**D-68766 Hockenheim (DE)**

(74) Vertreter: **Müller-Rissmann, Werner Albrecht, Dr. Carl Zeiss,**
**Patentabteilung**
**73446 Oberkochen (DE)**

(56) Entgegenhaltungen:
EP-A- 0 476 384      DE-A- 3 804 330
US-A- 5 247 594

• ELECTRONICS LETTERS, Bd. 29, Nr. 9, 29.April 1993 STEVENAGE GB, Seiten 733-734, XP 000363082 L. LERNER 'minimum bending loss interconnection for integrated optics waveguides'

**Beschreibung**

Die Erfindung betrifft eine integriert optische Anordnung aus Monomode-Wellenleitern und mit einem Y-Verzweiger. Diese haben einzelne Mikrometer Breite und Tiefe und sind vorzugsweise durch Ionenaustausch in Glas hergestellt. EP 0 476 384 A1 gibt ein Beispiel.
Derartige Anordnungen werden für die Nachrichtentechnik in 1 x N, z. B. 1 x 16, Verzweigerstrukturen auf einzelnen Chips von ca. 30 mm Länge eingebaut. Gefordert sind dabei einerseits minimale Leistungsverluste und große Gleichmäßigkeit der Leistungsverteilung auf die einzelnen Ausgänge, andererseits hohe Integration auf kleinem Raum. Letzteres erfordert möglichst enge Krümmungsradien der Wellenleiter und eine Vielzahl von Krümmungs-Übergangsstellen, was alles die Leistungsverluste erhöht. Zur Gleichmäßigkeit der Leistungsverteilung müssen herkömmlich die elementaren
Y-Verzweiger möglichst symmetrisch - einschließlich dem vorangehenden Leitungsabschnitt - aufgebaut sein, was die Krümmungsverhältnisse noch schwieriger macht.

DE 29 16 961 beschreibt einen Verzweiger für Multimode-Lichtleitfasern von typisch 80 μm Durchmesser, bei dem Lichtleitfasern stumpf aneinander stoßen. Die geometrischen Transmissions-Koeffizienten von der ankommenden Faser zu der weiterführenden und der abzweigenden Faser ergeben sich als Verhältnis der sich überlappenden Flächen der Faserkerne zur gesamten Kernfläche der ankommenden Faser (Fig. 4). Wellenoptische Effekte spielen bei den dicken Multimode-Fasern keine Rolle, ebensowenig die eventuelle Krümmung der ankommenden Faser. Der Versatz erfolgt an der Verzweigungsstelle, nicht an einer vorgelagerten Übergangsstelle zwischen einem - insbesondere gekrümmten - Eingangswellenleiter und dem Verzweigerbauteil.

Aus DE 31 07 112, DE 3 804 330 und Neumann, E.-G., IEE Proc., Vol. 129, Pt. H, No. 5, October 1982, pp. 278-280 ist es bekannt, daß die Verluste an Übergängen zwischen Wellenleitern mit verschiedener Krümmung durch seitlichen Versatz reduziert werden können. Dies wird damit erklärt, daß das Maximum der Grundmode einer im Wellenleiter wandernden Welle mit enger werdendem Radius im Wellenleiter nach außen wandert. Durch den Versatz der Wellenleiter kann die daraus resultierende Modenfehlanpassung an den Übergängen zwischen Wellenleitern verschiedener Krümmung kompensiert werden. Als Beispiele werden Stabwellenleiter, Streifenleiter und Fasern angegeben.

Das gleiche wird in JP 4-131806 A am Beispiel eines berührungslosen 2 x 2-Kopplers mit geätzten scharfkantigen Streifenleitern beschrieben, ebenfalls in US 5 247 594, Fig. 20. In letzterer Schrift wird auch auf ionendiffundierte Glaswellenleiter Bezug genommen.

Aufgabe der Erfindung ist es, eine gattungsgemäße Anordnung anzugeben, bei der das Leistungsverzweigungsverhältnis gezielt eingestellt, insbesondere gleichmäßig (1 : 1) gemacht, werden kann.

Gelöst wird die Aufgabe dadurch, daß bei einer gattungsgemäßen Anordnung der Y-Verzweiger mit einem seitlichen Versatz an einen Wellenleiter angesetzt ist.

Überraschend wurde gefunden, daß die zur Verlustminderung bekannte Maßnahme des Seitenversatzes auch zur gezielten Einstellung des Verzweigungsverhältnisses umgesetzt werden kann, wenn sie am Übergang zu einem Y-Verzweiger eingesetzt wird.

Dies ist besonders überraschend, wenn die Wellenleiter durch Ionenaustausch hergestellt sind, da sie dann keine scharfen Ränder aufweisen und auch der Versatz keine abrupte Änderung darstellt, auch wenn die zur Fabrikation benutzten lithographischen Masken einen abrupten Versatz aufweisen. Die Y-Verzweiger-Baugruppe selbst bleibt gemäß der Erfindung unverändert.

Insbesondere wurde festgestellt, daß sich die Kompensation der Modenfeldfehlanpassung bereits bei schwach gekrümmten Wellenleitern sehr vorteilhaft auf die Gleichmäßigkeit des nachfolgenden Y-Verzweigers auswirkt, auch wenn die von Neumann a.a.O. beschriebenen Verluste vernachlässigbar sind. Bei Strukturen aus kaskadierten Verzweigern ist die Kompensation besonders wichtig, da sich die Ungleichmäßigkeiten potenzieren. So führt beispielsweise eine Aufteilung 49 : 51 bei einem 1 x 32-Verzweiger zu Transmissionsunterschieden von 22%. Bei kaskadierten Verzweigern ist es wichtig, auch die Modenfeldfehlanpassung hinter dem einzelnen Y-Verzweiger zu kompensieren, da sich Einschwingvorgänge, die sich nachteilig auf die Gleichmäßigkeit der folgenden Verzweiger auswirken, in integriert optischen Strukturen über Wegstrecken von mehreren Millimetern nachweisen lassen.

Besonders vorteilhaft kommt der Seitenversatz zum Tragen, wenn der vorangehende Wellenleiter gekrümmt ist, da es nun möglich ist, auch da eine gleichmäßige Leistungsverteilung auf die beiden Ausgänge zu erzielen.

In Kombination mit der Anwendung des Seitenversatzes an allen Übergängen zwischen verschiedenen Krümmungen, lassen sich aus mehreren Y-Verzweigern aufgebaute 1 x N-Verzweiger besonders kompakt, verlustarm und gleichmäßig aufbauen. Lediglich der Übergang von einem geraden Eingangswellenleiter zu dem ersten Y-Verzweiger bleibt dabei in der Regel ohne Seitenversatz.

Weitere Vorteile ergeben sich, wenn Ionenaustausch mit einer lithographischen Maske mit abruptem Versatz zur Herstellung verwendet wird, wobei die Stegbreite der Maske vorzugsweise unter 2 μm liegt und die Halbwertsbreite der Wellenleiter aber das zwei- bis vierfache davon beträgt. Die Wellenleiter bilden dann stetige, nicht abrupte, Übergänge. Die Wellenleiter sind Monomode-Wellenleiter, bei denen die Ausdehnung des Modenfeldes und des Wellenleiters etwa gleich sind und die Ankopplung der Modenfelder an den Übergängen von kritischer Bedeutung ist.

Somit ergibt sich auch das besonders vorteilhafte Verfahren zum Einstellen des Leistungsverzweigungsverhältnisses nach Anspruch 8.

Die Zeichnung dient zur näheren Erläuterung der Erfindung.

Fig. 1      zeigt schematisch einen 1 x 4-Verzweiger;

Fig. 2      zeigt die Transmission eines auf einen Bogen folgenden Y-Verzweigers in die beiden Ausgänge als Funktion des Versatzes. Eingetragen ist auch der zugehörige Leistungsverlust.

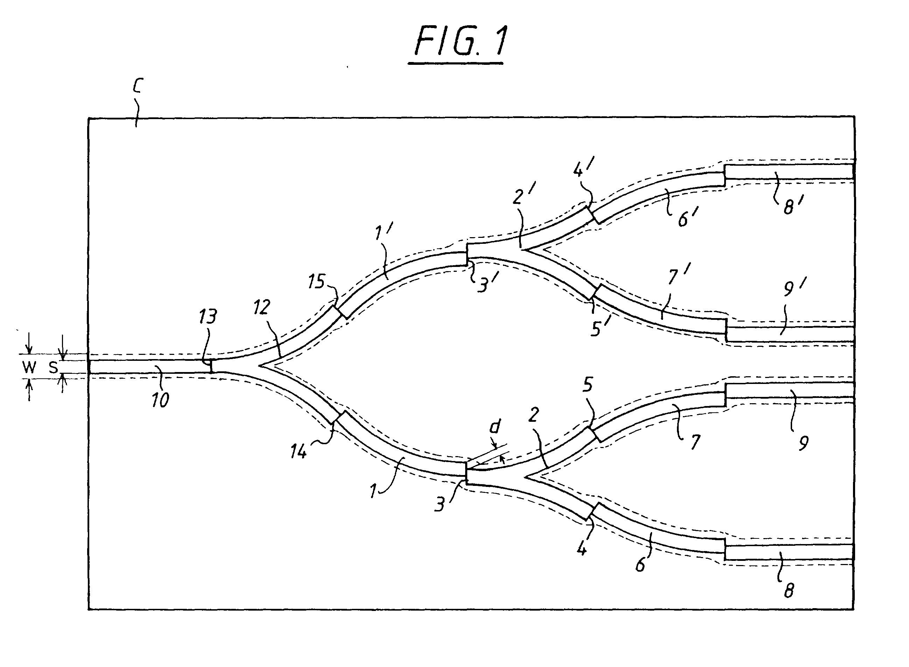

Die durchgezogenen Linien in Fig. 1 entsprechen der Form der lithographischen Maske (Stegbreite s), die gestrichelten Linien entsprechen der Halbwertsbreite (w) des Brechzahlprofils. Die Skizze ist rein qualitativ zu verstehen und ist nicht maßstäblich. Auf dem integriert-optischen Chip C der Fig. 1 ist ein Y-Verzweiger 2 angeordnet, dem ein gekrümmter Wellenleiter 1 vorangeht. Erfindungsgemäß ist am Übergang 3 zwischen den beiden ein seitlicher Versatz (d) der wellenleitenden Struktur vorgesehen. Zur Erzielung einer gleichmäßigen Leistungsverteilung auf die beiden Ausgänge 4, 5 des Y-Verzweigers 2 ist der Versatz zur Bogenaußenseite gerichtet. Symmetrisch zu den Teilen 1-5 finden sich die gleichen Teile 1' bis 5' nochmals auf dem Chip C.

Die Wellenleiter 1, 1' schließen an die beiden Ausgänge 14, 15 eines ersten Y-Verzweigers 12 symmetrisch an. Ein gerader Wellenleiter 10 führt vom eingangsseitigen Rand des Chips C zum Y-Verzweiger 12. Hier ist am Übergang 13 kein seitlicher Versatz vorgesehen, da die Modenverteilung im geraden Wellenleiter 10 zentriert ist. Wird jedoch eine ungleichmäßige Leistungsverteilung auf die beiden Ausgänge 14, 15 benötigt, kann auch hier (13) ein Seitenversatz vorgesehen werden.

Die Y-Verzweiger 2, 2', 12 unterscheiden sich untereinander nicht, insbesondere sind die Verzweiger 2, 2' symmetrisch aufgebaut. Die Kurvenradien in den Verzweigern 2, 2', 12 betragen 100 mm, der Abstand des Zwickels der Maske zur Herstellung von der Übergangsstelle 3, 3' mit dem Versatz beträgt daher über 400 µm.

Um einen 1 x 4-Verzweiger-Chip mit parallelen Ausgängen zu erhalten, sind an die Ausgänge 4, 5, 4', 5' Wellenleiter-Bögen 6, 7, 6', 7' und -Geraden 8, 9, 8', 9' angefügt.

Zur Minimierung der Dämpfung ist an allen Übergängen 14, 15, 4, 5, 4', 5' zwischen verschieden gekrümmten Wellenleitern einschließlich den Übergängen zwischen den Bögen 6, 7, 6', 7' und den Geraden 8, 9, 8', 9' ein seitlicher Versatz entsprechend den Angaben der DE 31 07 112 vorgesehen.

Für eine gegebene Verzweigergeometrie und einen bestimmten Krümmungsradius kann man mit Hilfe von Simulationsrechnungen den optimalen Versatz d zwischen gekrümmtem Wellenleiter 1 und Y-Verzweiger 2 berechnen.

In der Tabelle eingetragen sind die berechneten normierten Ausgangsleistungen des Y-Verzweigers $I_1$ und $I_2$, bzw. die sich daraus ergebende Gleichmäßigkeit u, die folgendermaßen definiert ist:

$$u = -10 \cdot (\log (I_1) - \log (I_2)$$

Der Wellenleiter 1 entspricht dem Standard eines durch Ionenaustausch in Glas erzeugten Wellenleiters, wie er für nachrichtentechnische Anwendungen eingesetzt wird. Die Breite der Maske für die Herstellung beträgt ca. 1,5 µm, die Halbwertsbreite des Brechzahlprofils beträgt ca. 5 µm. Die Halbwertsbreite des Monomode-Feldes beträgt ebenfalls ca. 5 µm. Der Wellenleiter - und natürlich der Y-Verzweiger - kann an der Oberfläche des Glassubstrats liegen oder als vergrabener Wellenleiter ausgebildet sein.

Tabelle 1 zeigt ein Beispiel für den Krümmungsradius 40 mm des Wellenleiters 1:

Tabelle 1

| d (µm) | Wellenlänge 1.31 µm | | | Wellenlänge 1.55 µm | | |
|---|---|---|---|---|---|---|
| | $I_1$ | $I_2$ | u [dB] | $I_1$ | $I_2$ | u [dB] |
| 0.0 | .506 | .486 | 0.18 | .465 | .533 | 0.59 |
| 0.1 | .501 | .491 | 0.09 | .474 | .524 | 0.44 |
| 0.2 | .496 | .496 | 0.00 | .483 | .515 | 0.28 |
| 0.3 | .491 | .501 | 0.09 | .492 | .506 | 0.12 |
| 0.4 | .486 | .506 | 0.18 | .501 | .496 | 0.04 |
| 0.5 | .481 | .510 | 0.25 | .509 | .487 | 0.19 |

Das heißt, je nach verwendeter Wellenlänge liegt hier der optimale Versatz d zwischen 0.2 und 0.4 µm. Deutlich ist die drastische Verbesserung der Gleichmäßigkeit durch die Einführung eines solchen Versatzes zu erkennen. So läßt sich z.B. für einen mittleren Versatz von 0.3 µm die Gleichmäßigkeit bei der Wellenlänge 1.31 µm von 0.18 dB auf 0.09 dB und gleichzeitig bei der Wellenlänge 1.55 µm von 0.59 dB auf 0.12 dB reduzieren.

Die beschriebenen Anordnungen sind also für den Zwei-Wellenlängen-Multiplex-Betrieb geeignet.

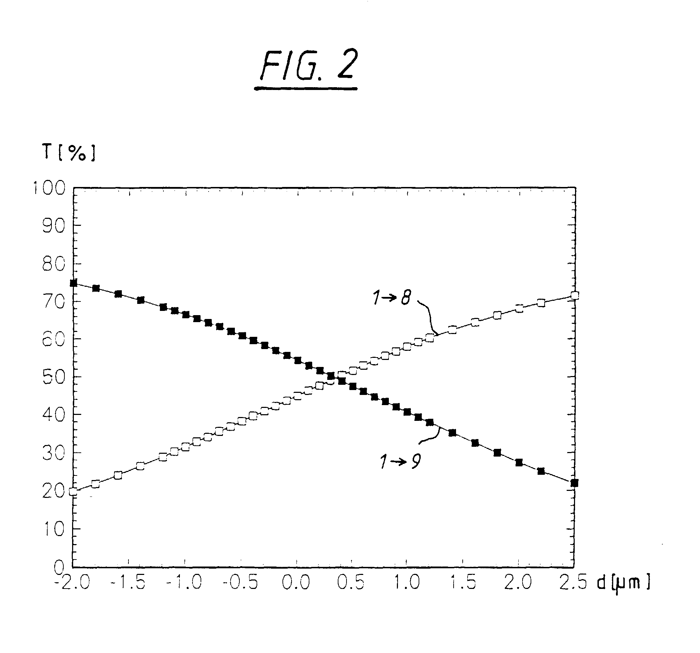

Fig. 2 zeigt für eine Anordnung gemäß Figur 1 und mit den obengenannten Abmessungen, jedoch mit einem Krümmungsradius von 30 mm des Wellenleiters 1 den vom Eingangswellenleiter 1 am Verzweiger 2 in die Ausgangswellenleiter 8 und 9 eingekoppelten Leistungsanteil T als Funktion des Versatzes d. Dabei ist ein Versatz zur Bogeninnenseite des Eingangswellenleiters 1 negativ angegeben. Die Angaben gelten für die Wellenlänge 1,31 µm.

Am Kreuzungspunkt der Kurven, also bei gleichmäßiger Leistungsverteilung bei einem Versatz von + 0,35 µm sind die Verluste zugleich verschwindend gering. Im ganzen gezeigten Bereich bleibt der Verlust L - zu den Rändern zunehmend - gering. Im Gegensatz dazu ist bei der eingangs zitierten DE 29 16 961 der Verlust bei Gleichverteilung am größten und erreicht 20 %.

Man sieht in Fig. 2 zugleich, daß der Seitenversatz d auch dazu geeignet ist, das Leistungsverzweigungsverhältnis des Y-Verzweigers 2 in weiten Grenzen einzustellen. Änderungen der Geometrie der Y-Verzweiger werden damit weitgehend überflüssig.

**Patentansprüche**

1. Integriert optische Anordnung aus Monomode Wellenleitern (1, 6, 7, 8, 9, 10) und mit einem Y-Verzweiger (2), dadurch gekennzeichnet, daß der Y-Verzweiger (2) mit einem seitlichen Versatz (d) zur gezielten Einstellung des Verzweigungsverhältnisses an einen Wellenleiter (1) angesetzt ist.

2. Verfahren zur Herstellung einer integriert optischen Anordnung nach Anspruch 1, dadurch gekennzeichnet, daß die Wellenleiter (1, 6, 7, 8, 9, 10) und der Y-Verzweiger (2) durch Ionenaustausch, insbesondere in einem Glassubstrat, hergestellt sind.

3. Integriert optische Anordnung nach Anspruch 1, dadurch gekennzeichnet, daß der Wellenleiter (1), an den der Y-Verzweiger (2) mit Versatz (d) angesetzt ist, gekrümmt ist.

4. Integriert optische Anordnung nach mindestens einem der Ansprüche 1 oder 3, dadurch gekennzeichnet, daß an allen Übergangsstellen (3, 4, 5, 14, 15, 4', 5') zwischen zwei verschiedenen Krümmungen ein seitlicher Versatz (d) der Wellenleiter (1, 6, 7, 1', 6', 7', 10) vorgesehen ist.

5. Verfahren zur Herstellung einer integriert optischen Anordnung nach mindestens einem der Ansprüche 2-4, gekennzeichnet durch den Herstellungsschritt des Ionenaustauschs mit einer lithographischen Maske, die an den Übergangsstellen (3, 3', 4, 5, 14, 15, 4', 5') einen abrupten seitlichen Versatz (d) aufweist.

6. Verfahren nach Anspruch 5, gekennzeichnet durch eine Stegbreite (s) der lithographischen Maske von weniger als 2 µm und eine Halbwertsbreite (w) der Wellenleiter (1, 6, 7, 8, 9, 10), die das zwei- bis vierfache der Stegbreite (s) beträgt.

7. Integriert optische Anordnung nach mindestens einem der Ansprüche 1, 3 oder 4, dadurch gekennzeichnet, daß die Wellenleiter (1, 6, 7, 8, 9, 10) und Y-Verzweiger (2, 2', 12) an den Übergangsstellen (3, 4, 5, 3', 4', 5', 14, 15) einen stetigen Übergang bilden.

8. Verfahren zum Einstellen des Leistungsverzweigungsverhältnisses einer integriert optischen Anordnung aus Monomode-Wellenleitern (1, 6, 7, 8, 9, 10) und mit einem Y-Verzweiger (2, 2', 12), dadurch gekennzeichnet, daß ein seitlicher Versatz (d) zur gezielten Einstellung des Verzweigungsverhältnisses am Übergang (3, 3') von einem Wellenleiter (1, 1') zur Eingangsseite des Y-Verzweigers (2, 2') vorgesehen wird.

**Claims**

1. Integrated optical device comprising several monomode waveguides (1, 6, 7, 8, 9, 10) and one Y-branch waveguide (2), and characterized by the fact the Y-branch waveguide (2) is connected to one of the waveguides (1) with a lateral offset (d) permitting the branching ratio to be set as required.

2. Method of producing an integrated optical device according to Claim 1, characterized by the fact that the waveguides (1, 6, 7, 8, 9, 10) and the Y-branch waveguide (2) are produced by an ion exchange process, in particular in a glass substrate.

3. Integrated optical device according to Claim 1, characterized by the fact that said waveguide (1) to which said Y-branch waveguide (2) is connected with a lateral offset (d) has a curved shape.

4. Integrated optical device according to at least one of the Claims 1 or 3, characterized by the fact that a lateral offset (d) is provided at all junctions (3, 4, 5, 14, 15, 4', 5') between the waveguides (1, 6, 7, 1', 6', 7', 10) of different curvatures.

5. Method of producing an integrated optical device according to at least one of the Claims 2-4, characterized by the production step of ion exchange using a lithographic mask which displays an abrupt lateral offset (d) at the junctions (3, 3', 4, 5, 14, 15, 4', 5').

6. Method according to Claim 5, characterized by the fact that the line width (s) of said lithographic mask is less than 2 μm and the half width (w) of the waveguides (1, 6, 7, 8, 9, 10) is two to four times the said line width (s).

7. Integrated optical device according to at least one of the Claims 1, 3 or 4, characterized by the fact that the waveguides (1, 6, 7, 8, 9, 10) and the Y-branch waveguides (2, 2', 12) form continuous transitions at the junctions (3, 4, 5, 3', 4', 5', 14, 15).

8. Method of setting the power branching ratio of an integrated optical device comprising monomode waveguides (1, 6, 7, 8, 9, 10) and Y-branch waveguides (2, 2', 12), characterized by the fact that a lateral offset (d) for setting the branching ratio required is provided at the junction (3, 3') between one of said waveguides (1, 1') and the inlet of said Y-branch waveguide (2, 2').

## Revendications

1. Dispositif optique intégré composé de guides d'ondes monomodes (1, 6, 7, 8, 9, 10) et comprenant un branchement Y (2), caractérisé en ce que le branchement Y (2) est adapté à un guide d'onde (1) avec un décalage latéral (d) pour un réglage ciblé du rapport de distribution.

2. Procédé pour la réalisation d'un dispositif optique intégré selon la revendication 1, caractérisé en ce que les guides d'ondes (1, 6, 7. 8, 9, 10) et le branchement Y (2) sont réalisés par échange d'ions, dans un substrat en verre notamment.

3. Dispositif optique intégré selon la revendication 1, caractérisé en ce que le guide d'ondes (1) qui est adapté au branchement Y (2) avec un décalage (d) est incurvé.

4. Dispositif optique intégré selon l'une au moins des revendications 1 et 3, caractérisé en ce qu'un décalage latéral (d) est prévu au niveau de toutes les transitions (3, 4, 5, 14, 15, 4', 5') entre les guides d'ondes (1, 6, 7, 1', 6', 7', 10) de courbure différente.

5. Procédé pour la réalisation d'un dispositif optique intégré selon l'une au moins des revendications 2 à 4, caractérisé par une étape de réalisation faisant intervenir l'échange d'ions avec un masque lithographique qui présente un décalage latéral accentué (d) au niveau des transitions (3, 3', 4, 5, 14, 15, 4', 5').

6. Procédé selon la revendication 5, caractérisé par une largeur de circuit (s) du masque lithographique inférieure à 2 μm et par une largeur à mi-hauteur d'indice de réfraction (w) des guides d'ondes (1, 6, 7, 8, 9, 10) qui est de deux à quatre fois la largeur de circuit (s).

7. Dispositif optique intégré selon l'une au moins des revendications 1, 3 et 4, caractérisé en ce que les guides d'ondes (1, 6, 7, 8, 9, 10) et les branchements (2, 2', 12) présentent une allure continue au niveau des transitions (3, 4, 5, 3', 4', 5', 14, 15).

8. Procédé de réglage du rapport de distribution de puissance au niveau des branchements d'un dispositif optique intégré composé de guides d'ondes monomodes (1, 6, 7, 8, 9, 10) et comprenant un branchement Y (2, 2', 12), caractérisé en ce qu'un décalage latéral (d) pour un réglage ciblé du rapport de distribution est prévu au niveau de la transition (3, 3') d'un guide d'ondes (1, 1') à la face d'entrée du branchement Y (2, 2').

FIG. 1

EP 0 683 407 B1

# FIG. 2